# EUROPEAN PATENT APPLICATION

(11) **EP 3 153 680 A1**
(43) Date of publication of application: **12.04.2017**
(21) Application number: 16192098.8
(22) Date of filing: 03.10.2016
(51) Int. Cl.: F02C 3/107, F02C 7/36, F01D 25/04, F16D 3/50

(54) **GAS TURBINE GEARBOX INPUT SHAFT**

(30) Priority: 06.10.2015 US 201514876124
(71) Applicant: General Electric Company, Schenectady, NY 12345 (US)
(72) Inventor: ANTELO, Randy Thomas, Cincinnati, OH 45215 (US); VAN DER MERWE, Gert J., Cincinnati, OH 45215 (US); FANG, Ning, Cincinnati, OH 45215 (US); MILLER, Steve D., Cincinnati, OH 45215 (US)
(74) Representative: Williams, Andrew Richard

(57) **Abstract**

A gas turbine gearbox input shaft 112 including a gear coupling 114 engaged with an engine power gearbox 100 and extending along a central engine axis 12 thereof. The shaft may include a separable tuning segment 110 coaxially joined to the gear coupling 114, and a spool coupling 116 joined to the separable tuning segment 118 opposite of the gear coupling, the spool coupling being engaged with an engine turbine spool. Methods of using the input shaft are also provided.

## Description

### FIELD

The present subject matter relates generally to a gas turbine engine, or more particularly to an input shaft for a gearbox of a gas turbine engine.

### BACKGROUND

A gas turbine engine generally includes a fan and a core arranged in flow communication with one another. Additionally, the core of the gas turbine engine general includes, in serial flow order, a compressor section, a combustion section, a turbine section, and an exhaust section. In operation, air is provided from the fan to an inlet of the compressor section where one or more axial compressors progressively compress the air until it reaches the combustion section. Fuel is mixed with the compressed air and burned within the combustion section to provide combustion gases. The combustion gases are routed from the combustion section to the turbine section. The flow of combustion gasses through the turbine section drives the turbine section and is then routed through the exhaust section (e.g., to the atmosphere). Additionally, the core generally includes one or more shafts extending between the turbine section and the compressor section such that rotation of the turbine section additionally drives the compressor section.

The one or more shafts of the core can also be mechanically coupled to the fan to facilitate rotation of the fan during operation of the gas turbine engine. However, in order to step down the rotational speed of the one or more shafts of the core to a more efficient rotational fan speed, a gearbox can be provided to mechanically couple the one or more shafts of the core to a fan shaft driving the fan.

The gearbox may be mounted to allow for some movement to accommodate (e.g., vibrations within the fan and/or core). However, extreme events, such as a bird strike or fan blade loss may encourage substantial movement of, for example, the fan shaft along an axial direction, a radial direction, and/or a circumferential direction of the gas turbine engine. These extreme events may displace the gearbox past and allowable range, which may cause one or more gears within the gearbox to bind up or otherwise fail. Moreover, even during normal operating conditions, the gearbox may be subjected to significant strain and/or displacement due to thermal expansion/contraction, aerial maneuvers, mechanical loads, etc. Over time, these may serve to reduce the usable life of the gearbox and the engine, itself.

Accordingly, an input shaft for a gearbox capable of accommodating a certain amount of displacement while isolating such displacement to the gearbox would be useful.

### BRIEF DESCRIPTION

Aspects and advantages of the invention will be set forth in part in the following description, or may be obvious from the description, or may be learned through practice of the invention.

In accordance with one aspect of the present disclosure, a turbine gearbox input shaft is provided. The turbine gearbox input shaft may include a gear coupling engaged with an engine power gearbox and extending along a central engine axis thereof. The turbine gearbox input shaft may also include a separable tuning segment coaxially joined to the gear coupling, and a spool coupling joined to the separable tuning segment opposite of the gear coupling. The spool coupling may be engaged with an engine turbine spool.

In accordance with another aspect of the present disclosure, a gas turbine engine is provided. The gas turbine engine may extend along a central axis and include a compressor for receiving and compressing a fluid flow, a combustor, a turbine, a power gearbox, and a gearbox input shaft. The combustor and the turbine may be positioned downstream from the compressor. The power gearbox may be disposed about the central axis to receive a rotational input generated at the turbine. The gearbox input shaft may operably connect the turbine and the power gearbox. The gearbox input shaft may include a gear coupling, a separable tuning segment, and a spool coupling. The gear coupling may be engaged with the power gearbox and extend along the central engine axis. The separable tuning segment may be coaxially joined to the gear coupling, while the spool coupling may be engaged with the turbine and joined to the separable tuning segment opposite of the gear coupling.

These and other features, aspects and advantages of the present invention will become better understood with reference to the following description and appended claims. The accompanying drawings, which are incorporated in and constitute a part of this specification, illustrate aspects of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a schematic cross-sectional view of an exemplary gas turbine engine according to various aspects of the present subject matter;
FIG. 2 provides a cross-sectional view of gearbox mounted within an exemplary engine of the present disclosure;
FIG. 3 provides a schematic cross-sectional view of the mounted gearbox of FIG. 2; and
FIG. 4 provides a magnified view of a gearbox input shaft according to an example of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first," "second," and "third" may be used interchangeably to distinguish one component from another and are not intended to signify location or importance of the individual components.

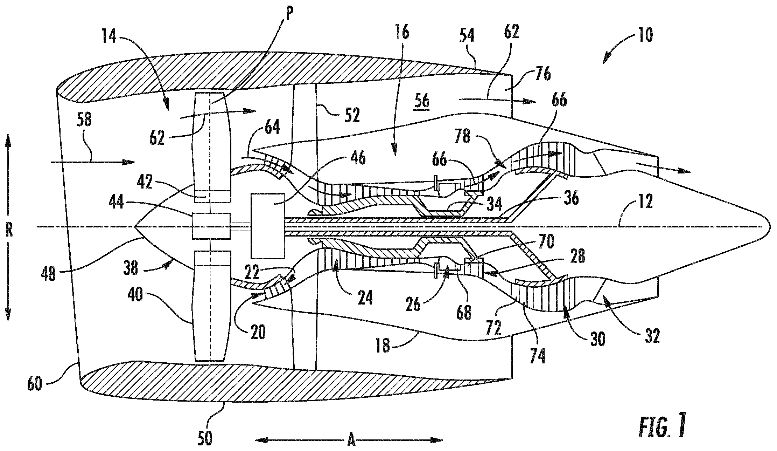

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline or central axis 12 provided for reference) and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustor or combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed and is attached to one or both of a core frame or a fan frame through one or more coupling systems 47.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

It should be appreciated, however, that the exemplary turbofan engine 10 depicted in FIG. 1 is by way of example only, and that in other exemplary embodiments, the turbofan engine 10 may have any other suitable configuration.

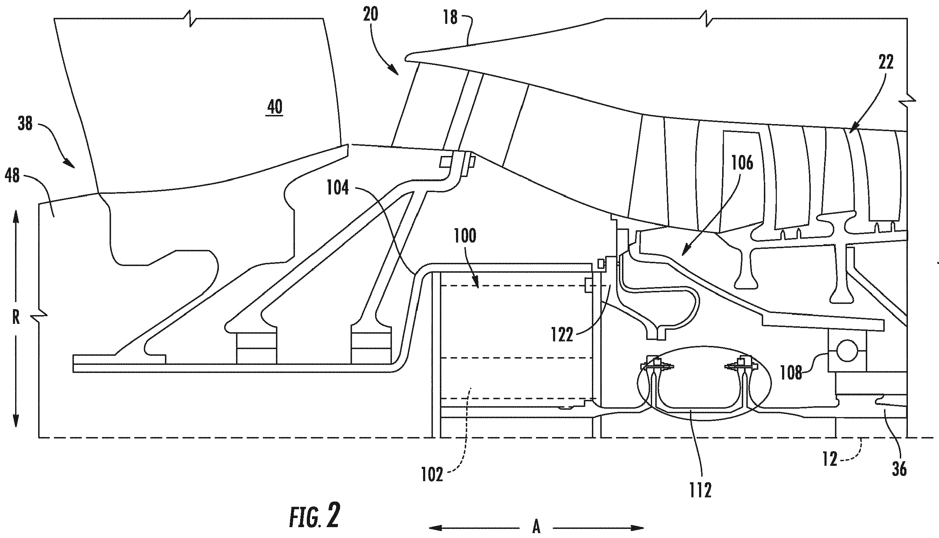

Referring now to FIG. 2, a side view of a gearbox 100 for a gas turbine engine 10 in accordance with an exemplary embodiment of the present disclosure is provided. In at least certain exemplary embodiments, the gearbox 100 of FIG. 2 may be incorporated into the turbofan engine 10 of FIG. 1 (e.g., configured as the exemplary gear box 46 depicted), and thus the same or similar numbering may refer to the same or similar parts.

For the embodiment of FIG. 2, the gearbox 100 includes a gear train 102 for transferring rotational power from an LP shaft 36 to an output shaft or fan shaft 104. Specifically, the LP shaft 36 is attached to the input shaft 112 to drive the input shaft 112. The LP shaft 36 is supported within the core 16 by a core frame, including a strut 106. The strut 106 is configured to support the LP shaft 36 via a bearing assembly 108. For the embodiment depicted, the bearing assembly 108 includes a single ball bearing assembly, which may accommodate rotation of the LP shaft 36 and support the LP shaft 36 along the radial direction R. However, in other exemplary embodiments, the bearing assembly 108 may additionally, or alternatively, include any other suitable bearing elements, such as one or more roller element bearings.

Accordingly, during operation the input shaft 112 may provide rotational power from the LP shaft 36 to the gear train 102 in a first direction. The gear train 102 may then rotate the attached fan shaft 104 to drive the fan 38, rotating a plurality of fan blades 40 and providing thrust for the turbofan engine 10.

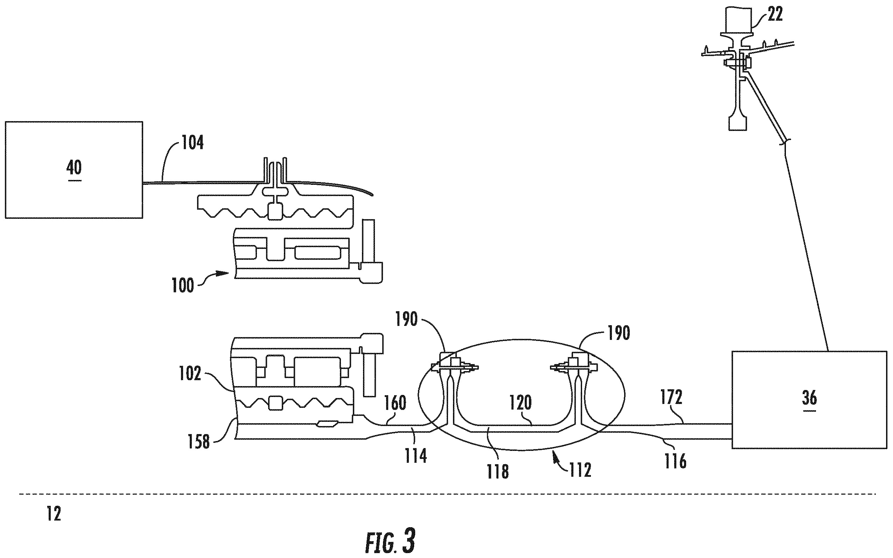

The input shaft 112 extends along the central axis 12 between a gear coupling 114 connected to and engaged with the gearbox 100 and a spool coupling 116 connected to and engaged with the LP shaft 36. Certain embodiments of the input shaft 112 have one or more discrete separable segments. For example, certain embodiments include a tuning segment 118 coaxially joined to the gear coupling 114 and the spool coupling 122. As illustrated in FIGS. 2 through 4, the tuning segment 118 is joined to the gear coupling 114 at a forward end 120, and joined to the spool coupling 116 at an opposite aft end 122. Although a single tuning segment 118 is illustrated in FIGS. 2 and 3, optional embodiments may include a plurality of separable tuning segments 118 coaxially joined between the gear coupling 114 and the spool coupling 116.

During operation of the turbofan engine 10, vibrations and other forces on the fan 38 may be propagated through the fan shaft 104 to the gearbox 100. For example, turbulent airflow across the plurality of fan blades 40, or a bird strike to the plurality of fan blades 40 may generate stresses and vibrations on the fan shaft 104. Advantageously, the input shaft 112 may be configured to substantially absorb and mitigate such stresses and vibrations without derailing one or more of the gears within the gear train 102 of the gearbox 100.

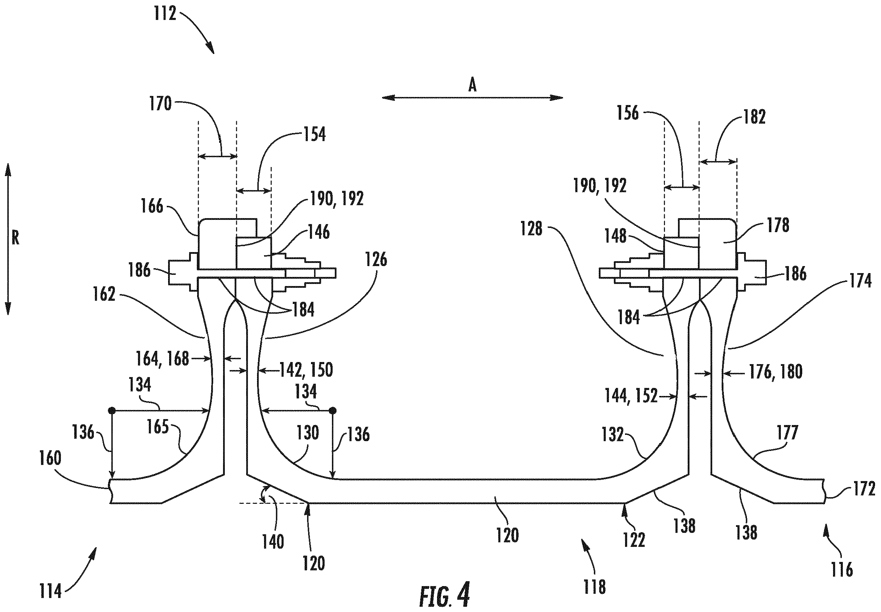

As shown in FIGS. 3 and 4, the tuning segment 118 of certain embodiments includes body 124 extending axially from the forward end 120 to the aft end 122. The body 124 may be formed to mount concentrically with at least a portion of the gear coupling 114 and spool coupling 116. A forward flange 126 extends radially at the forward end 120 of the body 124, while an aft flange 128 extending radially at the aft end 122 of the body 124. Each flange 126, 128 is joined to the body 124 by a transitional radius 130, 132. The forward transitional radius 130 is disposed between the body 124 and the forward flange 126, while the aft transitional radius 132 is disposed between the body 124 and the aft flange 128. Each transitional radius 130, 132 has one or more radial length 134, 136. If multiple radial lengths 134, 136 are included for a single transitional radius 130, 132, a first radial length 134 may define an axially-extending portion of the exterior surface curve profile while a second radial length 136 may define a radially-extending portion of the exterior surface curve profile. The forward transitional radius 130 and aft transitional radius 132 may be defined by identical or discrete radial lengths 134, 136. Although the illustrated transitional radii 130, 132 generally form an angle of 90° between the flanges 126, 128 and the body 124, it is envisioned that a generally obtuse or acute angle may be formed by each transitional radius 130, 132 without departing from the scope of the present subject matter.

Further embodiments include a corner fillet 138 defined opposite each curve profile. Specific embodiments of the corner fillet 138 may be defined at a linear angle 140, as seen in the exemplary embodiment of FIG. 3. The linear angle 140 of some embodiments is defined at angle of 10° and 70° relative to the axial centerline 12. The linear angle 140 of other embodiments is defined at angle of 20° and 40° relative to the axial centerline 12. Alternative embodiments of the corner fillet 138 may be defined at a convex arc (not pictured).

As part of some flange embodiments, a band 142, 144 may extend radially from the transitional radius 130, 132. Furthermore, a circumferential attachment rim 146, 148 may be disposed at a radial extreme of the band 142, 144. Each band 142, 144 has a band thickness 150, 152. When mounted within the engine, the band thickness 150, 152 may be defined in the axial direction A. Similarly, each circumferential attachment rim 146, 148 has a rim thickness 154, 156 defined in the axial direction A. Certain embodiments incorporate a band thickness 150, 152 that is less than the rim thickness 154, 156 and, advantageously, permit the flange 126, 128 to deflect without engaging the adjacent gear coupling 114 or spool coupling 116. Some embodiments may include such features at the forward flange 126 or aft flange 128, or both.

For instance in an exemplary embodiment, a forward band 142 extends radially from the forward transitional radius 130. The forward band 142 having a band thickness 150 defined in the axial direction A, and a circumferential attachment rim 146 disposed on the forward band 142 in engagement with a portion of the gear coupling 114. The circumferential attachment rim 146 having a rim thickness 154 greater than the band thickness 150 of the forward band 142. In an additional or alternative embodiment, an aft band 144 extends radially from the aft transitional radius 132. The aft band 144 having a band thickness 152 defined in the axial direction A, and a circumferential attachment rim 148 disposed on the aft band 144 in engagement with a portion of the spool coupling 116. The circumferential attachment rim 148 having a rim thickness 156 greater than the band thickness 152 of the aft band 144.

Certain embodiments of the tuning segment 118 may be formed of a single piece of material bent to a desired shape, or alternatively, may be formed of several discrete elements.

Turning to the gear coupling 114, some embodiments include a gear engagement face 158 positioned on a portion of the power gearbox 100. The engagement face 158 may define one or more gear teeth to drive the gearbox 100 during operation. A shank 160 extends axially from the engagement face 158 toward the separable tuning segment 118. At an axial extreme of the shank 160, a shank flange 162 extends radially to engage the forward flange 126 of the separable tuning segment 118. In some embodiments, the engagement face 158 and shank 160 may be formed as a single integral piece. In alternative embodiments, the engagement face 158 may be a discrete member selectively joined to the shank according to one or suitable method.

Similar to the tuning segment flange, the shank flange 162 may include a band 164 having a band thickness 168 and a circumferential attachment rim 166 having a thickness greater than thickness 168 of the shank band 164. In addition, a shank radius 165 may be disposed between the shank 160 and shank band 164 according to one or more radial length 134, 136. Although the illustrated shank radius 165 generally forms an angle of 90° between the shank flange 162 and the shank 160, it is envisioned that a generally obtuse or acute angle may be formed by a shank radius 165 without departing from the scope of the present subject matter.

As to the spool coupling 116, some embodiments include a spindle 172 coaxial with the gear coupling 114 and extending in a direction opposite thereto. A spindle flange 174 extends radially at an axial extreme to engage the aft flange 128 of the separable tuning segment 118. The spindle flange 174 may include a band 176 having a band thickness 180 and a circumferential attachment rim 178 having a thickness greater than thickness 180 of the spindle band 176. In addition, a spindle radius 177 may be disposed between the spindle 172 and spindle band 176 according to one or more radial length 134, 136. Although the illustrated spindle radius 177 generally forms an angle of 90° between the spindle flange 174 and the spindle 172, it is envisioned that a generally obtuse or acute angle may be formed by a spindle radius 177 without departing from the scope of the present subject matter.

Each of the gear coupling 114 and the spool coupling 116 maybe selectively joined to the separable tuning segment 118 to permit non-destructive disassembly and reassembly of the input shaft 112. Advantageously, in the even that a portion of the input shaft 112 is found to be damaged or in need of service, that portion may be removed and/or replaced without complete disassembly of the gearbox 100. Moreover, other features of the engine may be accessed without removal of the entire input shaft 112.

In some embodiments, one or more mechanical attachment elements may be provided to selectively and non-destructively form the input shaft 112. In an exemplary embodiment, the mating flange pairs define matching axial holes. Specifically, the forward flange 126 of the tuning segment 118 defines an axial orifice 184. The shank flange 162 defines an axial orifice 184 concentric to the axial orifice 184 of the forward flange 126. An attachment bolt 186 is disposed through the axial orifice 184 of the forward flange 126 and the axial orifice 184 of the shank flange 162. One or more attachment nut or washer may further be provided. Similarly, the aft flange 128 of the tuning segment 118 defines another axial orifice 184. The spindle flange 174 defines an axial orifice 184 concentric to the axial orifice 184 of the aft flange 128. An attachment bolt 186 is further disposed through the axial orifice 184 of the aft flange 128 and the axial orifice 184 of the spindle flange 174.

In an additional or alternative embodiment, a rabbeted joint 190, 192 is formed between one or more segments. For instance, a forward rabbeted joint 192 may be formed between the shank flange 162 and forward circumferential attachment rim 146. In certain embodiments, a rabbet 192 is defined at the shank flange 162 to receive a portion of the circumferential attachment rim 146 and extend axially across the same, as shown in FIG. 4. Alternatively, a rabbet 192 may be defined at the forward flange 126 to receive a portion of the shank flange 162. The rabbet 192 may be positioned according to the materials chosen for each of the gear coupling 114 and the tuning segment 118, thereby accommodating for thermal expansion of each element during operation.

In a further exemplary embodiment, an aft rabbeted joint 190 is formed spindle flange 174 and the aft circumferential attachment rim 148. In certain embodiments, a rabbet 192 is defined at the spindle flange 174 to receive a portion of the aft circumferential attachment rim 148 and extend axially across the same, as shown in FIG. 4. Alternatively, a rabbet 192 may be defined at the aft flange 128 to receive a portion of the spindle flange 174. The rabbet 192 may be positioned according to the materials chosen for each of the spool coupling 116 and the tuning segment 118, thereby accommodating for thermal expansion of each element during operation.

Furthermore, each of the tuning segment 118, the gear coupling 114, and the spool coupling 116 may be formed of one or more suitable materials having desired mechanical properties (e.g., strength, ductility, hardness, impact resistance, etc.). Each of the tuning segment 118, the gear coupling 114, and the spool coupling 116 may be formed from discrete materials. Optionally, the tuning segment material may be substantially different from that of the gear coupling 114 and/or spool coupling 116. In certain embodiments, the gear coupling 114 is formed from a first material having a first modulus of elasticity, while the separable tuning segment 118 is formed from a second material having a second modulus of elasticity, the second modulus elasticity being less than the first modulus of elasticity. For example, the gear coupling 114 may be formed from a steel alloy while the tuning segment 118 is substantially formed from a titanium alloy.

Similarly, the spool coupling 116 of some embodiments is formed from a first material having a first modulus of elasticity, while the separable tuning segment 118 is formed from a second material having a second modulus of elasticity, the second modulus elasticity being less than the first modulus of elasticity. The spool coupling 116 first material may be the same as that of the gear coupling 114, or it may not. For example, the spool coupling 116 may be formed from a steel alloy while the tuning segment 118 is substantially formed from a titanium alloy.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A turbine gearbox input shaft, comprising:
   a gear coupling engaged with an engine power gearbox and extending along a central engine axis thereof;
   a separable tuning segment coaxially joined to the gear coupling; and
   a spool coupling joined to the separable tuning segment opposite of the gear coupling, the spool coupling being engaged with an engine turbine spool.
2. The turbine gearbox input shaft of clause 1, wherein the separable tuning segment includes
   a body extending axially from a forward end to an aft end,
   a forward flange extending radially at the forward end of the body,
   an aft flange extending radially at the aft end of the body,
   a forward transitional radius disposed between the body and the forward flange, and
   an aft transitional radius disposed between the body and the aft flange.
3. The turbine gearbox input shaft of any preceding clause, wherein the gear coupling includes
   a gear engagement face positioned on a portion of the power gearbox,
   a shank extending axially to toward the separable tuning segment, and
   a shank flange extending radially to engage the forward flange of the separable tuning segment.
4. The turbine gearbox input shaft of any preceding clause, wherein the forward flange defines an axial orifice, and the shank flange defines an axial orifice concentric to the axial orifice of the forward flange, the gearbox input shaft further comprising an attachment bolt disposed through the axial orifice of the forward flange and the axial orifice of the shank flange.
5. The turbine gearbox input shaft of any preceding clause, wherein the forward flange includes
   a forward band extending radially from the forward transitional radius, the forward band having a band thickness defined in the axial direction, and
   a circumferential attachment rim disposed on the forward band in engagement with the shank flange, the circumferential attachment rim having a rim thickness greater than the band thickness of the forward band.
6. The turbine gearbox input shaft of any preceding clause, wherein a rabbeted joint is formed between the shank flange and the circumferential attachment rim.
7. The turbine gearbox input shaft of any preceding clause, wherein the spool coupling includes
   a spindle coaxial with the gear coupling and extending in a direction opposite thereto, and
   a spindle flange extending radially to engage the aft flange of the separable tuning segment.
8. The turbine gearbox input shaft of any preceding clause, wherein the aft flange includes
   an aft band extending radially from the aft transitional radius, the aft band having a band thickness defined in the axial direction, and
   a circumferential attachment rim disposed on the aft band in engagement with the spindle flange, the circumferential attachment rim having a rim thickness greater than the band thickness of the aft band.
9. The turbine gearbox input shaft of any preceding clause, wherein the separable tuning segment includes a plurality of separable tuning segments coaxially joined between the gear coupling and the spool coupling.
10. The turbine gearbox input shaft of any preceding clause, wherein the gear coupling is formed from a first material having a first modulus of elasticity, and wherein the separable tuning segment is formed from a second material having a second modulus of elasticity, the second modulus elasticity being less than the first modulus of elasticity.
11. A gas turbine engine extending along a central axis, comprising:
   a compressor for receiving and compressing a fluid flow;
   a combustor positioned downstream from the compressor;
   a turbine positioned downstream from the compressor;
   a power gearbox disposed about the central axis to receive a rotational input generated at the turbine; and
   a gearbox input shaft operably connecting the turbine and the power gearbox, the gearbox input shaft including
      a gear coupling engaged with the power gearbox and extending along the central engine axis,
      a separable tuning segment coaxially joined to the gear coupling, and
      a spool coupling engaged with the turbine and joined to the separable tuning segment opposite of the gear coupling.
12. The gas turbine engine of any preceding clause, wherein the separable tuning segment includes
   a body extending axially from a forward end to an aft end,
   a forward flange extending radially at the forward end of the body,
   an aft flange extending radially at the aft end of the body,
   a forward transitional radius disposed between the body and the forward flange, and
   an aft transitional radius disposed between the body and the aft flange.
13. The gas turbine engine of any preceding clause, wherein the gear coupling includes
   a gear engagement face positioned on a portion of the power gearbox,
   a shank extending axially to toward the separable tuning segment, and
   a shank flange extending radially to engage the forward flange of the separable tuning segment.
14. The gas turbine engine of any preceding clause, wherein the forward flange defines an axial orifice, and the shank flange defines an axial orifice concentric to the axial orifice of the forward flange, the gearbox input shaft further comprising an attachment bolt disposed through the axial orifice of the forward flange and the axial orifice of the shank flange.
15. The gas turbine engine of any preceding clause, wherein the forward flange includes
   a forward band extending radially from the forward transitional radius, the forward band having a band thickness defined in the axial direction, and
   a circumferential attachment rim disposed on the forward band in engagement with the shank flange, the circumferential attachment rim having a rim thickness greater than the band thickness of the forward band.
16. The gas turbine engine of any preceding clause, wherein a rabbeted joint is formed between the shank flange and the circumferential attachment rim.
17. The gas turbine engine of any preceding clause, wherein the spool coupling includes
   a spindle coaxial with the gear coupling and extending in a direction opposite thereto, and
   a spindle flange extending radially to engage the aft flange of the separable tuning segment.
18. The gas turbine engine of any preceding clause, wherein the aft flange includes
   an aft band extending radially from the aft transitional radius, the aft band having a band thickness defined in the axial direction, and
   a circumferential attachment rim disposed on the aft band in engagement with the spindle flange, the circumferential attachment rim having a rim thickness greater than the band thickness of the aft band.
19. The gas turbine engine of any preceding clause, wherein the separable tuning segment includes a plurality of separable tuning segments coaxially joined between the gear coupling and the spool coupling.
20. The gas turbine engine of any preceding clause, wherein the gear coupling is formed from a first material having a first modulus of elasticity, and wherein the separable tuning segment is formed from a second material having a second modulus of elasticity, the second modulus elasticity being less than the first modulus of elasticity.

## Claims

1. A turbine gearbox input shaft (112), comprising:
a gear coupling (114) engaged with an engine power gearbox (100) and extending along a central engine axis (12) thereof;
a separable tuning segment (118) coaxially joined to the gear coupling (114); and
a spool coupling (116) joined to the separable tuning segment (118) opposite of the gear coupling (114), the spool coupling (116) being engaged with an engine turbine spool (34, 36).

2. The turbine gearbox input shaft (112) of claim 1, wherein the separable tuning segment (118) includes
a body (124) extending axially from a forward end (120) to an aft end (122),
a forward flange (126) extending radially at the forward end (120) of the body (124),
an aft flange (128) extending radially at the aft end (122) of the body (124),
a forward transitional radius (130) disposed between the body (124) and the forward flange (126), and
an aft transitional radius (132) disposed between the body (124) and the aft flange (128).

3. The turbine gearbox input shaft (112) of claim 2, wherein the gear coupling (114) includes
a gear engagement face (158) positioned on a portion of the engine power gearbox (100),
a shank (160) extending axially to toward the separable tuning segment (118), and
a shank flange (162) extending radially to engage the forward flange (126) of the separable tuning segment (118).

4. The turbine gearbox input shaft (112) of claim 3, wherein the forward flange (126) defines an axial orifice (184), and the shank flange (162) defines an axial orifice (184) concentric to the axial orifice (184) of the forward flange (126), the gearbox input shaft (112) further comprising an attachment bolt (186) disposed through the axial orifice (184) of the forward flange (126) and the axial orifice (184) of the shank flange ( 162).

5. The turbine gearbox input shaft (112) of either of claim 3 or 4, wherein the forward flange (126) includes
a forward band (142) extending radially from the forward transitional radius (130), the forward band (142) having a band thickness (150) defined in the axial direction, and
a circumferential attachment rim (146) disposed on the forward band (142) in engagement with the shank flange (162), the circumferential attachment rim (146) having a rim thickness (154) greater than the band thickness (150) of the forward band (142).

6. The turbine gearbox input shaft (112) of claim 5, wherein a rabbeted joint is formed between the shank flange and the circumferential attachment rim.

7. The turbine gearbox input shaft (112) of any of claims 2 to 5, wherein the spool coupling (116) includes
a spindle (172) coaxial with the gear coupling (114) and extending in a direction opposite thereto, and
a spindle flange (174) extending radially to engage the aft flange (128) of the separable tuning segment (118).

8. The turbine gearbox input shaft (112) of claim 7, wherein the aft flange (128) includes
an aft band (144) extending radially from the aft transitional radius (132), the aft band (144) having a band thickness (152) defined in the axial direction, and
a circumferential attachment rim (148) disposed on the aft band (144) in engagement with the spindle flange (174), the circumferential attachment rim (148) having a rim thickness (156) greater than the band thickness (152) of the aft band (144).

9. The turbine gearbox input shaft (112) of any preceding claim, wherein the separable tuning segment (118) includes a plurality of separable tuning segments (118) coaxially joined between the gear coupling (114) and the spool coupling (116).

10. The turbine gearbox input shaft (112) of any preceding claim, wherein the gear coupling (114) is formed from a first material having a first modulus of elasticity, and wherein the separable tuning segment (118) is formed from a second material having a second modulus of elasticity, the second modulus elasticity being less than the first modulus of elasticity.

11. The turbine gearbox input shaft (112) of any of the preceding claims, further comprising a gas turbine engine (10) extending along the central axis (12), the gas turbine engine (10) including
a compressor (22, 24) for receiving and compressing a fluid flow;
a combustor (26) positioned downstream from the compressor (22, 24);
a turbine (28, 39) positioned downstream from the compressor (22, 24) and operably joined to the engine turbine spool (34, 36);
the engine power gearbox (100) disposed about the central axis (12) to receive a rotational input generated at the turbine.
